# FASCICULE DE BREVET EUROPEEN

(11) **EP 3 724 963 B1**
(45) Date de publication et mention de la délivrance du brevet: **15.09.2021**
(21) Numéro de dépôt: 18833269.6
(22) Date de dépôt: 06.12.2018
(51) Int. Cl.: H02J 7/00

(54) **BATTERIE A ACCUMULATEURS COMMUTES**
BATTERIE MIT GESCHALTETEN AKKUMULATOREN
BATTERY WITH SWITCHED ACCUMULATORS

(30) Priorité: 12.12.2017 FR 1761991
(43) Date de publication de la demande: 21.10.2020
(73) Titulaire: Commissariat à l'Energie Atomique et aux Energies Alternatives, 75015 Paris (FR)
(72) Inventeur: LOPEZ, Yan, 38140 RENAGE (FR); FERNANDEZ, Eric, 38760 SAINT PAUL DE VARCES (FR); BACQUET, Sylvain, 38470 CHASSELAY (FR); CASSARINO, Leandro, 33400 TALENCE (FR); DESPESSE, Ghislain, 38340 VOREPPE (FR); THOMAS, Remy, 38130 ECHIROLLES (FR)
(74) Mandataire: Cabinet Beaumont
(86) Numéro de dépôt international: PCT/FR2018/053145
(87) Numéro de publication internationale: WO 2019/115916

(56) Documents cités:
- US-A1- 2013 093 396
- US-A1- 2014 015 488
- US-A1- 2017 054 306

## Description

### Domaine

La présente demande concerne le domaine des batteries à accumulateurs commutés.

### Exposé de l'art antérieur

Une batterie à accumulateurs commutés est une batterie comprenant une pluralité de modules généralement identiques connectés en série et/ou en parallèle dont le nombre dépend de la tension voulue aux bornes de la batterie. Chaque module comprend une pluralité d'accumulateurs électriques. Des interrupteurs connectés en série et en parallèle avec les accumulateurs permettent de relier, ou non, en série et/ou en parallèle chaque accumulateur entre des noeuds de sortie du module, de manière à choisir la tension de sortie parmi les différentes combinaisons des tensions fournies par les accumulateurs.

Chaque module de batterie comprend un circuit de commande des interrupteurs. Le circuit de commande est adapté à sélectionner les accumulateurs à relier entre les noeuds de sortie en fonction de divers critères, par exemple la tension de sortie voulue ou le niveau de charge de chaque accumulateur. Le circuit de commande peut commander un circuit de pilotage adapté à fournir les signaux de commande adaptés aux interrupteurs. Le circuit de commande peut en outre être relié à des capteurs, par exemple des capteurs de température des accumulateurs, des capteurs des tensions aux bornes des accumulateurs, etc.

Le circuit de commande, le circuit de pilotage et les capteurs sont alimentés par une tension d'alimentation qui est de préférence référencée à la masse du module. Une possibilité est que la tension d'alimentation du module soit fournie par un accumulateur du module connecté à la masse. Un inconvénient est que si l'accumulateur fournissant la tension d'alimentation est déchargé ou s'il subit une défaillance causant une chute importante de la tension d'alimentation, le circuit de commande et le circuit de pilotage ne sont plus alimentés et les accumulateurs ne peuvent plus être commutés.

Une autre possibilité est que la tension d'alimentation puisse être fournie par un accumulateur du module parmi plusieurs accumulateurs référencés à différents potentiels par l'intermédiaire de convertisseurs tension continue - tension continue à isolation galvanique, également appelés convertisseurs DC-DC à isolation galvanique. Un inconvénient est qu'il faut prévoir, pour chaque accumulateur participant à la fourniture de la tension d'alimentation, un convertisseur DC-DC à isolation galvanique adapté à fournir la puissance maximale demandée par le circuit de commande, le circuit de pilotage et les capteurs du module. L'ensemble des convertisseurs DC-DC peut présenter un coût de fabrication important.

Une autre possibilité est que les tensions d'alimentation des modules soient fournies par une source d'alimentation commune externe aux modules par l'intermédiaire de convertisseurs DC-DC à isolation galvanique. Un inconvénient est que, pour chaque module, le convertisseur DC-DC à isolation galvanique doit être adapté à fournir la puissance maximale demandée par le circuit de commande, le circuit de pilotage et les capteurs du module. Un tel convertisseur DC-DC peut présenter un coût de fabrication important.

### Résumé

Ainsi, un objet d'un mode de réalisation est de pallier au moins en partie les inconvénients des batteries à accumulateurs commutés décrites précédemment.

Ainsi, un mode de réalisation prévoit une batterie à accumulateurs commutés comprenant :
un bus d'alimentation ;
un ensemble d'accumulateurs électriques et de premiers interrupteurs reliant les accumulateurs entre eux ;
des deuxièmes interrupteurs formant un pont en H et reliant ledit ensemble à des noeuds ;
un premier circuit de fourniture de premiers signaux de commande aux premiers interrupteurs et aux deuxièmes interrupteurs ;
un deuxième circuit de fourniture d'une première tension d'alimentation au premier circuit à partir de la tension aux bornes de l'un des accumulateurs ;
un troisième circuit de fourniture de deuxièmes signaux de commande à au moins deux des deuxièmes interrupteurs et connecté au bus d'alimentation ; et
des premières diodes reliant le premier circuit auxdits au moins deux des deuxièmes interrupteurs et des deuxièmes diodes reliant le troisième circuit auxdits au moins deux des deuxièmes interrupteurs.

Selon un mode de réalisation, le troisième circuit comprend un convertisseur isolé de tension continue en tension continue relié au bus d'alimentation et adapté à fournir une deuxième tension d'alimentation.

Selon un mode de réalisation, la batterie comprend un quatrième circuit alimenté à partir de la deuxième tension d'alimentation et adapté à commander le premier circuit.

Selon un mode de réalisation, le troisième circuit comprend un troisième interrupteur entre le convertisseur isolé et les deuxièmes diodes, le troisième interrupteur étant commandé par le quatrième circuit.

Selon un mode de réalisation, le quatrième circuit est adapté à commander l'activation ou la désactivation du deuxième circuit.

Selon un mode de réalisation, la batterie comprend des capteurs alimentés à partir de la deuxième tension d'alimentation.

Un mode de réalisation prévoit également un procédé d'utilisation d'une batterie telle que définie précédemment, comprenant les étapes suivantes :
détecter la défaillance dudit l'un des accumulateurs ;
désactiver le deuxième circuit ; et
commander lesdits au moins deux des deuxièmes interrupteurs avec les deuxièmes signaux de commande.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un module d'une batterie à accumulateurs commutés ;
la figure 2 représente un mode de réalisation plus détaillé de certains éléments du module de la figure 1 ;
la figure 3 représente, de façon partielle et schématique, un mode de réalisation d'un module d'une batterie à accumulateurs commutés ; et
la figure 4 est un chronogramme illustrant le fonctionnement du module de batterie selon le mode de réalisation de la figure 3.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. Sauf précision contraire, l'expression "sensiblement", signifie à 10 % près, de préférence à 5 % près.

Sauf précision contraire, lorsque l'on fait référence à deux éléments connectés entre eux, cela signifie que ces deux éléments sont directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

Lorsque l'on fait référence à l'état d'un interrupteur ou d'un transistor, on parle de l'état passant ou de l'état bloquant. Lorsque l'on fait référence à la tension d'un point ou d'un noeud, on considère qu'il s'agit de la tension entre le point ou noeud et la masse.

De plus, on appelle "signal binaire" un signal qui alterne entre un premier état constant, par exemple un état bas, noté "0", et un deuxième état constant, par exemple un état haut, noté "1". Les états haut et bas de signaux binaires différents d'un même circuit électronique peuvent être différents. En pratique, les signaux binaires peuvent correspondre à des tensions ou à des courants qui peuvent ne pas être parfaitement constants à l'état haut ou bas.

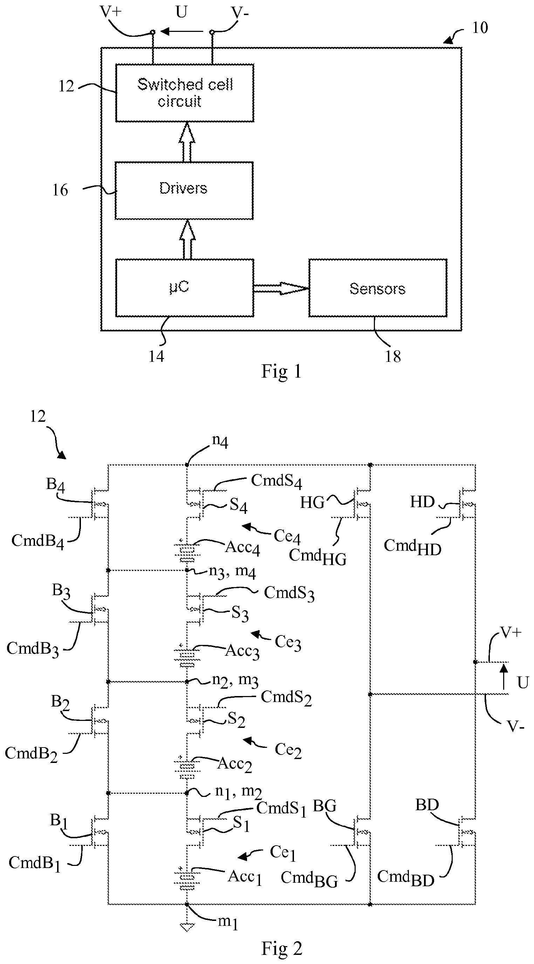

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.La figure 1 représente schématiquement un module 10 de batterie à accumulateurs commutés comprenant des noeuds de sortie V+ et V-. Le module 10 comprend un circuit à accumulateurs commutés 12 (Switched cell circuit) comprenant des accumulateurs électriques et des interrupteurs et adapté à fournir une tension U entre les noeuds de sortie V+ et V-. Le module 10 comprend en outre un circuit de commande 14 (µC) adapté à sélectionner les accumulateurs à relier entre les noeuds de sortie V+ et V- en fonction de divers critères, par exemple la tension de sortie U voulue et/ou le niveau de charge de chaque accumulateur. Le circuit de commande 14 peut comprendre un circuit électronique dédié et/ou un processeur (notamment un microprocesseur ou un microcontrôleur) adapté exécuter des instructions d'un programme d'ordinateur stockées dans une mémoire. Le module 10 comprend en outre un circuit de pilotage 16 (Drivers) commandé par le circuit de commande 14 et adapté à fournir des signaux adaptés à commander la fermeture/l'ouverture des interrupteurs du circuit 12. Le circuit de commande 14 peut en outre être relié à des capteurs 18 (Sensors), adaptés à mesurer au moins une caractéristique d'au moins certains des accumulateurs, de préférence de chaque accumulateur, par exemple la tension fournie par l'accumulateur, son courant ou sa température, et à fournir ces mesures au circuit de commande 14.

La figure 2 représente un mode de réalisation plus détaillé du circuit 12 à accumulateurs commutés de la figure 1. Le circuit 12 comprend N unités Ceᵢ, N étant un nombre entier et i variant de 1 à N. Dans l'exemple de la figure 2, N est égal à 4. Chaque unité Ceᵢ comprend des noeuds mᵢ et nᵢ. Le noeud nᵢ de l'unité Ceᵢ est connecté au noeud mᵢ₊₁ de l'unité Ceᵢ₊₁, pour i variant de 1 à N-1. Le noeud m₁ de l'unité Ce₁ est connecté à la masse du module. Chaque unité Ceᵢ comprend un accumulateur Accᵢ connecté en série par la cathode avec un transistor Sᵢ entre les noeuds mᵢ et nᵢ, l'anode de l'accumulateur Ceᵢ étant connectée au noeud mᵢ. L'anode de l'accumulateur Acc₁ est donc connectée au noeud m₁ et à la masse. Chaque unité Ceᵢ comprend aussi un transistor Bᵢ connecté entre les noeuds mᵢ et nᵢ, en parallèle avec l'ensemble comprenant l'accumulateur Accᵢ et le transistor Sᵢ. Les transistors Sᵢ et Bᵢ ont fonction d'interrupteurs et sont commandés respectivement par des signaux de commande CmdSᵢ et CmdBᵢ. Dans le présent mode de réalisation, les transistors Sᵢ et Bᵢ sont des transistors MOS à canal N.

Le noeud n_{N}, ici n₄, est relié au noeud de sortie V- du module 10 par un interrupteur HG, par exemple un transistor, commandé par un signal de commande CmdHG. Le noeud n_{N} est relié au noeud de sortie V+ du module 10 par un interrupteur HD, par exemple un transistor, commandé par un signal de commande CmdHD. Le noeud m₁ est relié au noeud de sortie V- du module 10 par un interrupteur BG, par exemple un transistor, commandé par un signal de commande CmdBG. Le noeud m₁ est relié au noeud de sortie V+ du module 10 par un interrupteur BD, par exemple un transistor, commandé par un signal de commande CmdBD. Les transistors HD, HG, BD et BG forment un pont en H. Dans le présent mode de réalisation, les transistors HD, HG, BD et BG sont des transistors MOS à canal N.

Les signaux de commande CmdHG, CmdHD, CmdBG, CmdBD, CmdSᵢ et CmdBᵢ sont fournis par le circuit de pilotage 16. Pour l'unité Ceᵢ, i variant de 1 à N, les signaux de commande CmdSᵢ et CmdBᵢ sont tels que lorsque le transistor Sᵢ est passant, le transistor Bᵢ est bloquant et inversement. Ainsi, la tension entre le noeud mᵢ et le noeud nᵢ est soit nulle, si Bᵢ est passant, soit sensiblement égale à la tension fournie par l'accumulateur Accᵢ si le transistor Sᵢ est passant. La tension entre les noeuds m₁ et n_{N} est donc sensiblement égale à une combinaison des tensions fournies par les différents accumulateurs Accᵢ des unités Ceᵢ.

Les signaux de commande des transistors HG, HD, BG et BD sont fournis par le circuit de pilotage 16, de telle manière que les transistors HG, HD, BG, BD aient au moins deux configurations possibles. Dans une première configuration, les transistors HD et BG sont passants et les transistors HG et BD sont bloquants. Ainsi, la tension au noeud de sortie V+ est sensiblement égale à la tension du noeud n_{N} et la tension au noeud de sortie V- est sensiblement égale à la tension du noeud m₁. Dans une seconde configuration, les transistors HD et BG sont bloquants et les transistors HG et BD sont passants. Ainsi, la tension au noeud de sortie V- est sensiblement égale à la tension du noeud n_{N} et la tension au noeud de sortie V+ est sensiblement égale à la tension du noeud m₁. Les deux configurations fournissent des tensions opposées entre les noeuds V+ et V-.

En fonctionnement, si la défaillance de l'un des accumulateurs Accᵢ est détectée, le circuit de commande 14 peut modifier les états des transistors Sᵢ et Bᵢ de manière à ne plus solliciter cet accumulateur.

Le circuit de commande 14 et le circuit de pilotage 16 sont par exemple alimentés par l'un des accumulateurs du module. La tension d'alimentation du circuit de commande 14 et du circuit de pilotage 16 étant de préférence référencée à la masse, la tension d'alimentation du circuit de commande 14 et du circuit de pilotage 16 peut être fournie par l'accumulateur Acc₁.

Si l'accumulateur Acc₁ subit une défaillance causant une chute importante de la tension fournie au circuit de commande, le circuit de commande 14 et le circuit de pilotage 16 ne peuvent alors plus être alimentés.

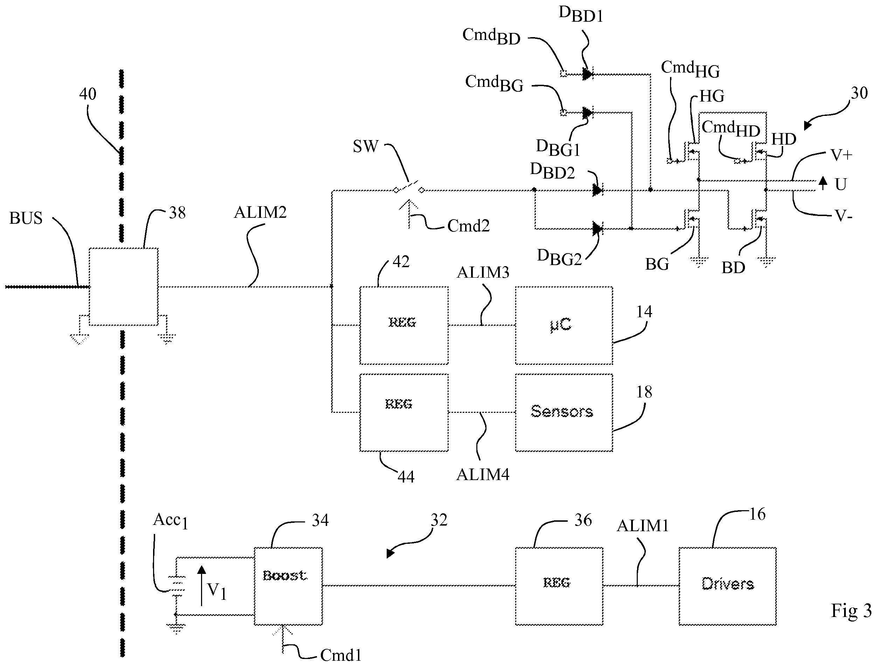

La figure 3 représente, de façon partielle et schématique, un mode de réalisation d'un module 30 d'une batterie à accumulateurs commutés. Le module 30 comprend l'ensemble des éléments du module 10 décrit précédemment, seuls les transistors HG, HD, BG et BD, l'accumulateur Acc₁, le circuit de commande 14, le circuit de pilotage 16 et les capteurs 18 étant représentés en figure 3.

Le module 30 comprend un circuit 32 de fourniture d'une tension d'alimentation ALIM1 à partir de la tension aux bornes de l'un des accumulateurs du module 30. De préférence, la tension d'alimentation ALIM1 devant être référencée à la masse, la tension d'alimentation ALIM1 est fournie par le circuit d'alimentation 32 à partir de la tension V₁ aux bornes de l'accumulateur Acc₁. Selon un mode de réalisation, le circuit d'alimentation 32 comprend un circuit élévateur de tension 34 (Boost) recevant la tension V₁ aux bornes de l'accumulateur Acc₁ et commandé par un signal Cmd1, et un circuit de régulation de tension 36 (REG) recevant la tension fournie par le circuit élévateur 34 et fournissant la tension ALIM1. Le signal de commande Cmd1 est fourni par le circuit de commande 14. A titre d'exemple, le signal Cmd1 est un signal binaire. Lorsque le signal de commande Cmd1 est dans un premier état, par exemple l'état haut, le circuit 34 est activé et le circuit d'alimentation 32 fournit la tension ALIM1. Lorsque le signal de commande Cmd1 est dans un deuxième état, par exemple l'état bas, le circuit 34 est désactivé et le circuit d'alimentation 32 ne fournit plus de tension d'alimentation.

Selon un mode de réalisation, la tension d'alimentation ALIM1 est utilisée seulement pour l'alimentation du circuit de pilotage 16.

Le module 30 comprend en outre un convertisseur de tension continu-continu à isolation galvanique 38 relié à un bus d'alimentation BUS et fournissant une tension ALIM2 à partir de la tension fournie par le bus d'alimentation BUS. Le bus d'alimentation BUS ne fait pas partie du module 30, la limite physique du module 30 étant représentée de façon schématique en figure 3 par une ligne en tirets 40. Le bus d'alimentation BUS peut être relié à chaque module 30 de la batterie.

Le module 30 comprend un circuit de régulation de tension 42 (REG) relié au convertisseur 38 et fournissant une tension d'alimentation ALIM3 au circuit de commande 14. Le module 30 comprend en outre un circuit de régulation de tension 44 (REG) relié au convertisseur 38 et fournissant une tension d'alimentation ALIM4 aux capteurs 18.

Le module 30 comprend une diode D_{BD1} dont l'anode est reliée au circuit de pilotage 16 et reçoit le signal Cmd_{BD} et dont la cathode est reliée à la grille du transistor BD. Le module 30 comprend en outre une diode D_{BD2} dont l'anode est reliée au convertisseur 38 par l'intermédiaire d'un interrupteur SW et dont la cathode est reliée à la grille du transistor BD.

Le module 30 comprend une diode D_{BG1} dont l'anode est reliée au circuit de pilotage 16 et reçoit le signal Cmd_{BG} et dont la cathode est reliée à la grille du transistor BG. Le module 30 comprend en outre une diode D_{BG2} dont l'anode est reliée au convertisseur 38 par l'intermédiaire de l'interrupteur SW et dont la cathode est reliée à la grille du transistor BG.

L'interrupteur SW est commandé par un signal Cmd2. Le signal de commande Cmd2 est fourni par le circuit de commande 14. A titre d'exemple, le signal Cmd2 est un signal binaire. Lorsque le signal de commande Cmd2 est dans un premier état, par l'exemple l'état haut, l'interrupteur SW est fermé et lorsque le signal de commande Cmd2 est dans un deuxième état, par exemple l'état bas, l'interrupteur SW est ouvert. L'interrupteur SW peut être réalisé par un transistor MOS. Selon un mode de réalisation, les signaux Cmd1 et Cmd2 peuvent être complémentaires.

Les diodes D_{BD1} et D_{BD2} constituent un premier bloc implémentant la fonction logique OU. Ainsi, la tension à la grille du transistor BD, constituant la sortie du premier bloc, est sensiblement égale à la tension la plus élevée parmi les tensions au niveau des anodes des diodes D_{BD1} et D_{BD2}, constituant les entrées du premier bloc.

Les diodes D_{BG1} et D_{BG2} constituent un deuxième bloc implémentant la fonction logique OU. Ainsi, la tension à la grille du transistor BG, constituant la sortie du deuxième bloc, est sensiblement égale à la tension la plus élevée parmi les tensions au niveau des anodes des diodes D_{BG1} et D_{BG2}, constituant les entrées du deuxième bloc.

La tension d'alimentation V₁ est par exemple comprise entre 1 V et 4 V selon le type de l'accumulateur Acc₁, par exemple égale à environ 2 V ou 3,6 V. La tension fournie par le circuit élévateur 34 est par exemple comprise entre 2 V et 4 V, par exemple égale à environ 3,8 V. La tension d'alimentation ALIM1 est par exemple comprise entre 2 V et 4 V, par exemple égale à environ 3,3 V. Les signaux de commande fournis par le circuit de commande 14 au circuit de pilotage 16 peuvent être des signaux binaire alternant entre un premier niveau, par exemple à 0 V et un second niveau, par exemple à 3,3 V. La tension fournie par le bus d'alimentation BUS peut être comprise entre 4 V et 30 V, par exemple égale à 5 V, 12 V ou 24 V. La tension ALIM2 fournie par le convertisseur 38 peut être comprise entre 4 V et 30 V, par exemple égale à 5 V, 12 V ou 24 V. De préférence, la tension ALIM2 est comprise entre 4 V et 5 V, ce qui permet d'avoir peu de pertes pour l'alimentation du circuit de commande 14 tout en permettant de fermer correctement l'interrupteur SW, notamment lorsque l'interrupteur SW correspond à un interrupteur de puissance.

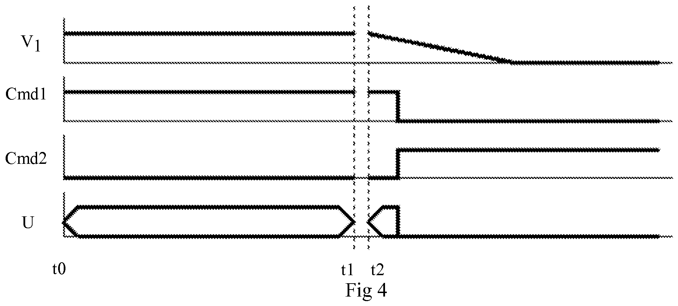

La figure 4 représente un chronogramme illustrant le fonctionnement du module 30 de batterie selon le mode de réalisation de la figure 3. Les instants t0, t1 et t2 sont des instants successifs.

Selon un mode de réalisation, lorsque l'accumulateur Acc₁ fonctionne normalement (de l'instant t0 à l'instant t1 en figure 4), le circuit de commande 14 fournit le signal Cmd1 à l'état haut de sorte que le circuit 34 est activé et le circuit de commande 14 fournit le signal Cmd2 à l'état bas de sorte que l'interrupteur SW est ouvert. Le circuit de pilotage 16 est alors alimenté par la tension ALIM1 et les interrupteurs BG et BD reçoivent à leur grille respectivement les signaux Cmd_{BG} et Cmd_{BD}. La tension U fournie par le module 30 dépend alors des signaux de commande Cmd_{HG}, Cmd_{HD}, Cmd_{BG} et Cmd_{BD}.

On a représenté en figure 4 une défaillance de l'accumulateur Acc₁ à partir de l'instant t2 par une diminution de la tension V₁. Le circuit de commande 14 est adapté à détecter la défaillance de l'accumulateur Acc₁ et/ou du circuit de pilotage 16. A titre d'exemple, le circuit de commande 14 peut détecter que la tension V1 diminue en dessous d'un seuil donné. Le circuit de commande 14 fournit alors le signal Cmd1 à l'état bas de sorte que le circuit 34 est désactivé et le circuit de commande 14 fournit le signal Cmd2 à l'état haut de sorte que l'interrupteur SW est fermé. Le circuit de pilotage 16 n'est alors plus alimenté et les interrupteurs BG et BD reçoivent à leur grille la tension ALIM2. Le circuit de pilotage 16 n'étant plus alimenté, les signaux de commande Cmd_{HG}, Cmd_{HD}, Cmd_{BG} et Cmd_{BD} sont à l'état bas. Les transistors HD et HG sont donc bloquants. Les grilles des transistors HD et HG recevant la tension ALIM2, les transistors BD et BG sont passants. La tension U est donc sensiblement nulle.

Un avantage du mode de réalisation du module 30 est que le convertisseur 38 n'est pas utilisé pour l'alimentation du circuit de pilotage 16 mais seulement pour l'alimentation du circuit de commande 14, des capteurs 18 et, en cas de défaillance de l'alimentation du circuit de pilotage 16, pour commander la fermeture des interrupteurs BG et BD du pont en H. Le convertisseur 38 doit donc fournir une puissance électrique inférieure à celle qui serait nécessaire s'il devait alimenter le circuit de pilotage 16. Un convertisseur 38 à faible encombrement et faible coût de fabrication peut être utilisé.

Un autre avantage du mode de réalisation du module 30 est que, en cas de de défaillance de l'alimentation du circuit de pilotage 16 de l'un des modules de la batterie, les interrupteurs BD et BG de ce module sont commandés pour que la tension U soit sensiblement nulle. La batterie peut donc continuer à fonctionner. En particulier, notamment dans le cas où les modules sont connectés en série, pour des modules classiques, la défaillance de l'un des modules entraîne l'arrêt du fonctionnement de la batterie alors qu'avec le mode de réalisation du module 30, la batterie peut continuer à fonctionner.

Un autre avantage du mode de réalisation du module 30 est que l'alimentation du circuit de commande 14 et des capteurs 18 est distincte de l'alimentation du circuit de pilotage 16. Ceci permet de réduire les perturbations sur les mesures réalisées par les capteurs 18.

Des modes de réalisation particuliers ont été décrits. Diverses variantes et modifications apparaîtront à l'homme de l'art. En particulier, un mode de réalisation particulier d'agencement d'accumulateurs électriques Accᵢ et d'interrupteurs Bᵢ et Sᵢ d'un module de batterie a été décrit en relation avec la figure 2. Toutefois, il est clair que l'agencement des accumulateurs électriques Accᵢ et des interrupteurs Bᵢ et Sᵢ peut être différent de ce qui est représenté en figure 2. A titre d'exemple, les accumulateurs du module peuvent être agencés comme cela est décrit dans la demande de brevet WO 2012117109. En outre, les transistors décrits précédemment constituant les interrupteurs dans des unités peuvent être remplacés par d'autres types d'interrupteurs selon les besoins du circuit.

## Revendications

1. Système électrique à cellules commutées comprenant :
un bus d'alimentation (BUS) ;
un ensemble de cellules électriques (Acc₁) et de premiers interrupteurs (S₁, B₁) reliant les cellules entre elles ;
des deuxièmes interrupteurs (HG, HD, BG, BD) formant un pont en H et reliant ledit ensemble à des noeuds (V+, V-) ;
un premier circuit (16) de fourniture de premiers signaux de commande (CmdHG, CmdHD, CmdBG, CmdBD, CmdS₁, CmdB₁) aux premiers interrupteurs et aux deuxièmes interrupteurs ;
un deuxième circuit (32) de fourniture d'une première tension d'alimentation (ALIM1) au premier circuit à partir de la tension (V₁) aux bornes de l'une des cellules ;
un troisième circuit (38, SW) de fourniture de deuxièmes signaux de commande (ALIM2) à au moins deux des deuxièmes interrupteurs (BG, BD) et connecté au bus d'alimentation ; et
des premières diodes (D_{BD1}, D_{BG1}) reliant le premier circuit auxdits au moins deux des deuxièmes interrupteurs et des deuxièmes diodes (D_{BD2}, D_{BG2}) reliant le troisième circuit auxdits au moins deux des deuxièmes interrupteurs.

2. Système électrique à cellules commutées selon la revendication 1, dans lequel le troisième circuit (38, SW) comprend un convertisseur isolé (38) de tension continue en tension continue relié au bus d'alimentation (BUS) et adapté à fournir une deuxième tension d'alimentation (ALIM2).

3. Système électrique à cellules commutées selon la revendication 2, comprenant un quatrième circuit (14) alimenté à partir de la deuxième tension d'alimentation (ALIM2) et adapté à commander le premier circuit (16).

4. Système électrique à cellules commutées selon la revendication 3, dans lequel le troisième circuit (38, SW) comprend un troisième interrupteur (SW) entre le convertisseur isolé (38) et les deuxièmes diodes (D_{BD2}, D_{BG2}), le troisième interrupteur étant commandé par le quatrième circuit (14).

5. Système électrique à cellules commutées selon la revendication 3 ou 4, dans lequel le quatrième circuit (14) est adapté à commander l'activation ou la désactivation du deuxième circuit (32).

6. Système électrique à cellules commutées selon l'une quelconque des revendications 2 à 5, comprenant des capteurs (18) alimentés à partir de la deuxième tension d'alimentation (ALIM2).

7. Procédé d'utilisation d'un système électrique selon l'une quelconque des revendications 1 à 6, comprenant les étapes suivantes :
détecter la défaillance de ladite une des cellules (Acc₁) ;
désactiver le deuxième circuit (32) ; et
commander lesdits au moins deux des deuxièmes interrupteurs (BG, BD) avec les deuxièmes signaux de commande (ALIM2).

## Patentansprüche

1. Ein elektrisches System mit geschalteten Zellen, das Folgendes aufweist:
einen Stromversorgungsbus (BUS);
eine Anordnung von elektrischen Zellen (Acc₁) und von ersten Schaltern (S₁, B₁), die die Zellen miteinander verbinden;
zweite Schalter (HG, HD, BG, BD), die eine H-Brücke bilden und die Anordnung mit Knoten (V+, V-) verbinden;
eine erste Schaltung (16) zum Liefern von ersten Steuersignalen (CmdHG, CmdHD, CmdBG, CmdBD, CmdS₁, CmdB₁) an die ersten Schalter und die zweiten Schalter;
eine zweite Schaltung (32) zum Liefern einer ersten Stromversorgungsspannung (ALIM1) an die erste Schaltung auf der Grundlage der Spannung (V₁) an einer der Zellen;
eine dritte Schaltung (38, SW) zum Liefern von zweiten Steuersignalen (ALIM2) an mindestens zwei der zweiten Schalter (BG, BD), die mit dem Stromversorgungsbus verbunden ist; und
erste Dioden (D_{BD1}, D_{BG1}), die die erste Schaltung mit den mindestens zwei der zweiten Schalter verbinden, und zweite Dioden (D_{BD2}, D_{BG2}), die die dritte Schaltung mit den mindestens zwei der zweiten Schalter verbinden.

2. Elektrisches System mit geschalteten Zellen nach Anspruch 1, wobei die dritte Schaltung (38, SW) einen isolierten Wandler (38) einer Gleichspannung in eine Gleichspannung aufweist, der mit dem Stromversorgungsbus (BUS) gekoppelt ist und eine zweite Stromversorgungsspannung (ALIM2) liefern kann.

3. Elektrisches System mit geschalteten Zellen nach Anspruch 2, das eine vierte Schaltung (14) aufweist, die von der zweiten Versorgungsspannung (ALIM2) gespeist wird und die erste Schaltung (16) steuern kann.

4. Elektrisches System mit geschalteten Zellen nach Anspruch 3, wobei die dritte Schaltung (38, SW) einen dritten Schalter (SW) zwischen dem isolierten Wandler (38) und den zweiten Dioden (D_{BD2}, D_{BG2}) aufweist, wobei der dritte Schalter von der vierten Schaltung (14) gesteuert wird.

5. Elektrisches System mit geschalteten Zellen nach Anspruch 3 oder 4, wobei die vierte Schaltung (14) in der Lage ist, die Aktivierung oder die Deaktivierung der zweiten Schaltung (32) zu steuern.

6. Elektrisches System mit geschalteten Zellen nach einem der Ansprüche 2 bis 5, mit Sensoren (18), die von der zweiten Versorgungsspannung (ALIM2) gespeist werden.

7. Verfahren zur Verwendung des elektrischen Systems nach einem der Ansprüche 1 bis 6, das die folgenden aufeinanderfolgenden Schritte aufweist:
Erkennen des Ausfalls der genannten einen Zelle (Acc₁);
Deaktivieren der zweiten Schaltung (32); und
Steuern der mindestens zwei der zweiten Schalter (BG, BD) mit den zweiten Steuersignalen (ALIM2).

## Claims

1. An electric system with switched cells comprising:
a power supply bus (BUS);
an assembly of electric cells (Acc₁) and of first switches (S₁, B₁) coupling the cells together;
second switches (HG, HD, BG, BD) forming an H bridge and coupling said assembly to nodes (V+, V-);
a first circuit (16) for supplying first control signals (CmdHG, CmdHD, CmdBG, CmdBD, CmdS₁, CmdB₁) to the first switches and to the second switches;
a second circuit (32) for delivering a first power supply voltage (ALIM1) to the first circuit based on the voltage (V₁) across one of the cells;
a third circuit (38, SW) for supplying second control signals (ALIM2) to at least two of the second switches (BG, BD) and connected to the power supply bus; and
first diodes (D_{BD1}, D_{BG1}) coupling the first circuit to said at least two of the second switches and second diodes (D_{BD2}, D_{BG2}) coupling the third circuit to said at least two of the second switches.

2. The electric system with switched cells according to claim 1, wherein the third circuit (38, SW) comprises an isolated converter (38) of a DC voltage into a DC voltage coupled to the power supply bus (BUS) and capable of delivering a second power supply voltage (ALIM2).

3. The electric system with switched cells according to claim 2, comprising a fourth circuit (14) powered from the second power supply voltage (ALIM2) and capable of controlling the first circuit (16).

4. The electric system with switched cells according to claim 3, wherein the third circuit (38, SW) comprises a third switch (SW) between the isolated converter (38) and the second diodes (D_{BD2}, D_{BG2}), the third switch being controlled by the fourth circuit (14).

5. The electric system with switched cells according to claim 3 or 4, wherein the fourth circuit (14) is capable of controlling the activation or the deactivation of the second circuit (32).

6. The electric system with switched cells according to any of claims 2 to 5, comprising sensors (18) powered from the second power supply voltage (ALIM2).

7. A method of use of the electric system according to any of claims 1 to 6, comprising the successive steps of:
detecting the failure of said one of the cells (Acc₁);
deactivating the second circuit (32); and
controlling said at least two of the second switches (BG, BD) with the second control signals (ALIM2).
